# EUROPEAN PATENT SPECIFICATION

(11) **EP 1 845 825 B1**
(45) Date of publication and mention of the grant of the patent: **29.10.2008**
(21) Application number: 05850915.9
(22) Date of filing: 27.12.2005
(51) Int. Cl.: A47J 27/62, F24C 3/12

(54) **A COOKING DEVICE**
GARVORRICHTUNG
APPAREIL DE CUISSON

(30) Priority: 28.12.2004 TR 200403662
(43) Date of publication of application: 24.10.2007
(73) Proprietor: Arçelik Anonim Sirketi, 34950 Istanbul (TR)
(72) Inventor: ARSLANTEKIN, Ihsan Arçelik Anonim Sirketi, 34950 Istanbul (TR)
(86) International application number: PCT/IB2005/054404
(87) International publication number: WO 2006/070334

(56) References cited:
- DE-A1- 3 146 638
- US-A- 4 869 233
- US-A- 5 096 725

## Description

The present invention relates to a cooking device wherein the boiling and spilling control of the pots heated is achieved.

The substances heated in cooking devices, especially the ones heated in cooking pots, kettles etc. on the cooktop, may boil and spill as a result of the user's lack of control. Various methods have been utilized for controlling the overflowing without waiting near the cooking device. The sensors detecting the level of the liquid about to boil or is boiling in the pot, the mechanical vibration created, temperature or the sound level, can only be utilized in special pots produced particularly for the control of boiling.

In the German Patent Application no. DE10058670, a ferromagnetic vibration element on the base of the cooking pot within a special chamber is described. The vibrational movement of this component varies with temperature and changes the inductance of the bobbin positioned on the glass-ceramic heater under the glass and the boiling is thus controlled. The base of the cooking pot where boiling is controlled, is designed so that the vibration element can be situated thereon. Document US-A-4 869 233 discloses a cooking device according to the preamble of independent claim 1.

The object of the present invention is the realization of a cooking device which comprises a boiling control device that can easily be utilized with any kind of cooking pot. Said object is achieved by the cooking device according to independent claim 1.

The cooking device realized in order to attain above mentioned aim of the present invention is shown in the attached figures, where:

Figure 1 - is the schematic view of a cooking device which controls boiling in a cooking pot.

Figure 2 - is the schematic view of a cooking pot and a probe which contacts the cooking pot from the center. Said embodiment does not fall within the scope of the claims.

Figure 3 - is the schematic view of a cooking pot and a probe which contacts the cooking pot from the side.

Figure 4 - is the schematic view of a cooking pot and the grate arm which transmits the vibration of the cooking pot.

Elements shown in the figures are numbered as follows:

1. Cooking device

2. Burner group

3. Cooktop

4. Grate

5. Boiling control device

6. Piezoelectric element

7. Probe

8. Probe retainer

9. Spring

10. Cable

11. Control card

12. Filter

13. Cooking pot

The cooking device (1) comprises a cooking pot (13), one or more electric or gas burner groups (2) enabling the cooking process, a cooktop (3) where the burner group (2) is situated, one or more grates (4) preferably built of metal arms, upon which the cooking pot (13) is placed, and a boiling control device (5) which detects the boiling of liquids heated in the cooking pot (13).

The boiling control device (5) comprises a piezoelectric element (6) which detects the boiling of liquids within the cooking pot (13) by converting the mechanical vibrations received from the cooking pot (13) and/or a surface that the cooking pot is in contact with, into electrical data like voltage (V), current (I) , a preferably rod shaped probe (7) which transmits the vibrations produced by the formation of bubbles in the cooking pot (13) to the piezoelectric element (6), a probe retainer (8) within which the probe (7) is housed allowing it to vibrate, a spring (9) situated preferably on the probe retainer (8) which pushes the probe (7) so that it is in constant contact with the cooking pot (13) and that it can detect the vibrations continuously, a cable (10) which provides the transmittance of the electrical data generated from the mechanical vibrations by the piezoelectric element (6) and a control card (11) which processes the electrical data received from the piezoelectric element (6) via the cable (10).

The control card (11) determines the boiling temperature by evaluating the voltage data (v1, v2, v3, ...) generated in the piezoelectric element by the vibrational frequencies (f1, f2, f3, ...) as a result of the different boiling temperatures. For example small sized bubble formation is defined with f1 vibrational frequency and v1 voltage, medium sized bubble formation is defined with f2 vibrational frequency and v2 voltage, and the large sized bubble formation is defined with f3 vibrational frequency and v3 voltage.

The control card (11) controls the flow of energy from the burner group (2) to the cooking pot (13) according to the boiling temperature it determines by the electrical data received from the piezoelectric element (6). If, for example a preset limit boiling temperature is exceeded, the gas transferred or the electric energy is reduced or completely cut.

The control card (11) comprises a filter (12) which differentiates the vibrational frequencies (f1, f2, f3, ...) created by boiling temperatures and the voltage data (v1, v2, v3, ...) formed as a result in the piezoelectric element (6) from the voltage data (w1, w2, w3, ...) generated in the piezoelectric element by the non-boiling vibrational frequencies (g1, g2, g3, ...) created by putting the cooking pot (13) on the grate (4) or hitting the sides of the cooking pot (13) by a spoon etc. while stirring the heated material in the cooking pot (13).

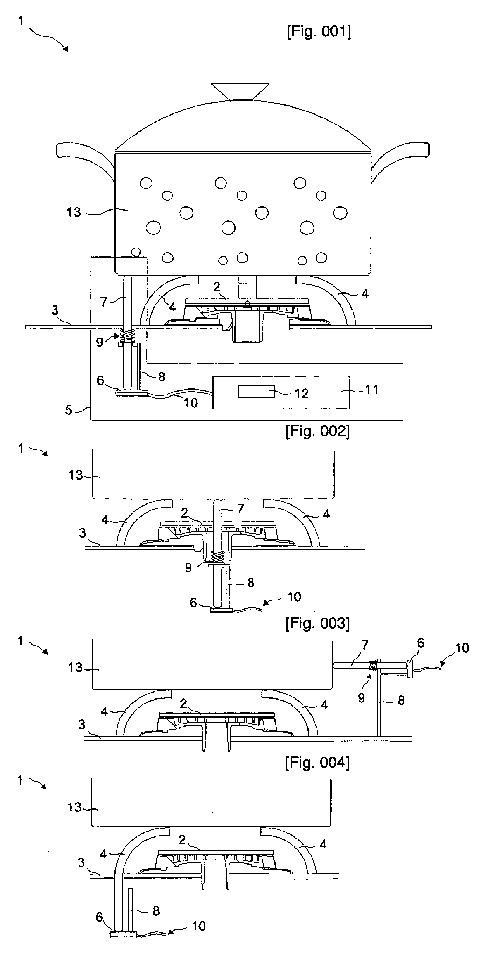

According to the present invention, the probe (7) is positioned so as to be in contact with the side of the cooking pot (13) base (Figure 1) or the side walls (Figure 3). In this embodiment, the vibrations can be detected more accurately by the probe (7) since the sides of the pot vibrate more compared to the center according to the force x lever arm principle.

In another embodiment of the present invention, one or more of the arms composing the grate (4) on which the cooking pot (13) is placed, are utilized in transmitting vibrations to the piezoelectric element (6) functioning as a probe (7). Thus the need for arrangement in the heater group (2) to situate a probe (7) is eliminated, consequently a low cost boiling control is achieved by utilizing fewer number of components. (Figure 4)

The air bubbles formed during boiling rise in the cooking pot (13) and cause the cooking pot (13) to vibrate in different vibrational frequencies as a result of their volume differences. The vibration of the cooking pot (13) is conveyed to the piezoelectric element (6) via the probe (7) which is in contact with it. The piezoelectric element (6) converts the mechanical vibrations received from the probe into electrical data and transmits them to the control card (11) to be evaluated. The control card (11) decides on low, medium or over boiling levels according to the evaluated electrical data and cuts the energy when a preset boiling value is exceeded avoiding overflowing.

The boiling of liquids can easily be detected in any kind of cooking pot (13) which the user utilizes and overflowing is prevented by the boiling control device (5).

## Claims

1. A cooking device (1) comprising a cooking pot (13), one or more electrical or gas burner groups (2) and a cook top (3) on which the burner group (2) is situated, a boiling control device (5) having a piezoelectric element (6) which converts the mechanical vibrations received from the cooking pot (13) and/or a surface that the cooking pot (13) is in contact with into electrical data to detect the boiling of liquids heated in the cooking pot (13), **characterized by** the boiling control device (5) comprising a probe (7), which transmits the vibrations produced by the formation of bubbles in the cooking pot (13) to the piezoelectric element (6) by contacting the cooking pot (13) and positioned so that it contacts the side of the cooking pot (13) base or the side walls.

2. A cooking device (1) as in Claim 1, **characterized by** the boiling control device (5) comprising a probe retainer (8) within which the probe (7) is embedded allowing it to vibrate, a spring (9) which pushes the probe (7) so that it is in constant contact with the cooking pot (13) and that it can detect the vibrations continuously, a cable (10) which provides the transmittance of the electrical data produced from the mechanical vibrations by the piezoelectric element (6) and a control card (11) which evaluates the electrical data received from the piezoelectric element (6) via the cable (10).

3. A cooking device (1) as in Claim 1, **characterized by** the boiling control device (5) comprising a control card (11) which determines the boiling level by evaluating the voltage data (v1, v2, v3, ...) generated in the piezoelectric element (6) by the vibration frequencies (f1, f2, f3, ...) as a result of the different boiling levels.

4. A cooking device (1) as in Claim 3, **characterized by** the boiling control device (5) comprising the control card (11) which controls the flow of energy from the burner group (2) to the cooking pot (13) according to the boiling level it determines by the electrical data received from the piezoelectric element (6).

5. A cooking device (1) as in Claim 3, **characterized by** the boiling control device (5) comprising the control card (11) having a filter (12) which can differentiate the voltage data (v1, v2, v3, ...) created by different boiling levels **from** the voltage data (w1, w2, w3, ...) formed as a result in the piezoelectric element (6) from the non-boiling vibration frequencies (g1, g2, g3, ...) created by putting the cooking pot (13) on the grate (4) or hitting the sides of the cooking pot (13) by a spoon etc. while stirring the heated material in the cooking pot (13).

6. A cooking device (1) as in Claim 1, **characterized by** a grate (4) built of one or more supporting arms on which the cooking pot (13) is placed, and one or more of the supporting arms are utilized in transmitting vibrations to the piezoelectric element (6).

## Patentansprüche

1. Kocheinrichtung (1), umfassend einen Kochbehälter (13), eine oder mehrere Elektro- oder Gas-Kochplattengruppen (2) und eine Kochoberfläche (3), auf der die Kochplattengruppe (2) angeordnet ist, wobei eine Kochsteuereinrichtung (5) ein piezoelektrisches Element (6) aufweist, das die mechanischen Vibrationen, die von dem Kochbehälter (13) und/oder einer Fläche, mit der der Kochbehälter (13) in Kontakt steht, in elektrische Daten umwandeln, um das Kochen von Flüssigkeiten zu detektieren, die in dem Kochbehälter (13) erwärmt werden, **dadurch gekennzeichnet, dass** die Kochsteuereinrichtung (5) einen Messfühler (7) umfasst, der die Vibrationen, die durch die Bildung von Blasen im Kochbehälter (13) erzeugt werden, an das piezoelektrische Element (6) überträgt, indem er in Kontakt mit dem Kochbehälter (13) steht, und indem er derart angeordnet ist, dass er die Seite der Basis des Kochbehälters (13) oder die Seitenwände berührt.

2. Kocheinrichtung (1) nach Anspruch 1, **dadurch gekennzeichnet, dass** die Kochsteuereinrichtung (5) eine Messfühlerhalterung (8) umfasst, in die der Messfühler (7) derart eingebettet ist, dass er vibrieren kann, eine Feder (9), die derart gegen den Messfühler (7) drückt, dass dieser in ständigem Kontakt mit dem Kochbehälter (13) steht, und dass er die Vibrationen kontinuierlich detektieren kann, ein Kabel (10), das die Übertragung der elektrischen Daten vorsieht, die durch das piezoelektrische Element (6) aus den mechanischen Vibrationen erzeugt werden, und eine Steuerkarte (11), die die elektrischen Daten auswertet, die über das Kabel (10) von dem piezoelektrischen Element (6) empfangen werden.

3. Kocheinrichtung (1) nach Anspruch 1, **dadurch gekennzeichnet, dass** die Kochsteuereinrichtung (5) eine Steuerkarte (11) umfasst, die den Kochpegel bestimmt, indem sie die Spannungsdaten (v1, v2, v3...), die aufgrund der unterschiedlichen Kochpegel durch die Vibrationsfrequenzen (f1, f2, f3...) in dem piezoelektrischen Element (6) erzeugt werden, auswertet.

4. Kocheinrichtung (1) nach Anspruch 3, **dadurch gekennzeichnet, dass** die Steuerkarte (11) der Kochsteuereinrichtung (5) den Energiefluss von der Kochplattengruppe (2) zu dem Kochbehälter (13) entsprechend dem Kochpegel steuert, den sie anhand der elektrischen Daten bestimmt, welche sie von dem piezoelektrischen Element (6) empfängt.

5. Kocheinrichtung (1) nach Anspruch 3, **dadurch gekennzeichnet, dass** die Steuerkarte (11) der Kochsteuereinrichtung (5) ein Filter (12) aufweist, das die Spannungsdaten (v1, v2, v3...), die von unterschiedlichen Kochpegeln erzeugt werden, von Spannungsdaten (w1, w2, w3...) unterscheiden kann, die in dem piezoelektrischen Element (6) durch Nicht-Kochfrequenzen (g1, g2, g3...) gebildet werden, welche erzeugt werden, indem der Kochbehälter (13) auf den Rost (4) gestellt wird, oder indem die Seiten des Kochbehälters (13) während des Rührens des erwärmten Materials im Kochbehälter (13) von einem Löffel usw. gestoßen werden.

6. Kocheinrichtung (1) nach Anspruch 1, **gekennzeichnet durch** einen Rost (4), der aus einem oder mehreren Tragearmen aufgebaut ist, auf die der Kochbehälter (13) gestellt wird, wobei einer oder mehrere der Tragearme dazu benutzt werden, Vibrationen an das piezoelektrische Element (6) zu übertragen.

## Revendications

1. Machine à cuire (1) comprenant un pot de cuisson (13), un ou plusieurs groupe électrique ou gaz de feu (2) et un sommet de cuisson (3) sur lequel le groupe de feu (2) est situé, une machine à contrôler le bouillonnement (5) ayant un élément piézo-électrique (6) qui transforme les vibrations reçues du pot de cuisson (13) et/ou une surface où le pot de cuisson (13) se met en contact avec les données électriques pour détecter le bouillonnement des liquides chauffés dans le pot de cuisson (13), **caractérisée par** une machine à contrôler le bouillonnement (5) comprenant une sonde (7) qui transmet les vibrations générées par la formation de bulles dans le pot de cuisson (13) vers l'élément piézo-électrique (6) en contactant le pot de cuisson (13) et positionnée de façon à ce qu'elle contacte le bord de la base du pot de cuisson (13) ou les murs de côté.

2. Machine à cuire (1) selon la Revendication 1, **caractérisée par** la machine à contrôler le bouillonnement (5) comprenant une attelle de sonde (8) à laquelle la sonde (7) est intégrée de façon à la faire vibrer, un ressort (9) qui pousse la sonde (7) pour qu'elle soit en contact permanent avec le pot de cuisson (13) et pour qu'elle puisse détecter continuellement les vibrations, un câble (10) qui assure la transmission des données électriques générées par les vibrations mécaniques à travers l'élément piézo-électrique (6) et une carte de contrôle (11) qui évalue les données électriques reçues de l'élément piézo-électrique (6) via le câble (10).

3. Machine à cuire (1) selon la Revendication 1, **caractérisée par** la machine à contrôler le bouillonnement (5) comprenant une carte de contrôle (11) qui détermine le niveau de bouillonnement en évaluant les données de voltage (v1, v2, v3, ...) générées dans l'élément piézo-électrique (6) par les fréquences de vibration (f1, f2, f3, ...) en tant que résultats de différents niveaux de bouillonnement.

4. Machine à cuire (1) selon la Revendication 3, **caractérisée par** la machine à contrôler le bouillonnement (5) comprenant une carte de contrôle (11) qui contrôle le flux d'énergie venant du groupe de feu (2) vers le pot de cuisson (13) en fonction du niveau de bouillonnement déterminé par les données électriques reçues de l'élément piézo-électrique (6).

5. Machine à cuire (1) selon la Revendication 3, **caractérisée par** la machine à contrôler le bouillonnement (5) comprenant une carte de contrôle (11) ayant une filtre (12) qui peut différencier les données de voltage (v1, v2, v3, ...) créées par différents niveaux de bouillonnement des données de voltage (w1, w2, w3, ...) formées en tant que résultats dans l'élément piézo-électrique (6) à partir des fréquences de vibration du non-bouillonnement (g1, g2, g3, ...) créées par la mise du pot de cuisson (13) sur la grille (4) ou en frappant les bord du pot de cuisson (13) par une cuillère, etc. pendant que l'on mélange le matériel chauffé dans le pot de cuisson (13).

6. Machine à cuire (1) selon la Revendication 1, **caractérisée par** une grille (4) construite d'un ou de plusieurs bras sur lequel le pot de cuisson (13) est placé, et dont un ou plusieurs bras sont utilisés pour transmettre les vibrations à l'élément piézo-électrique (6).
